# EUROPÄISCHE PATENTSCHRIFT

(11) **EP 3 191 314 B1**
(45) Veröffentlichungstag und Bekanntmachung des Hinweises auf die Patenterteilung: **12.08.2020**
(21) Anmeldenummer: 15757307.2
(22) Anmeldetag: 07.09.2015
(51) Int. Cl.: B60B 35/08, B60B 35/04

(54) **ACHSEINHEIT**
AXLE UNIT
UNITÉ D'ESSIEU

(30) Priorität: 12.09.2014 DE 102014218332
(43) Veröffentlichungstag der Anmeldung: 19.07.2017
(73) Patentinhaber: SAF-HOLLAND GmbH, 63856 Bessenbach-Keilberg (DE)
(72) Erfinder: CHRIST, Armin, 63856 Bessenbach (DE); BORDE, Florian, 63599 Biebergemünd (DE)
(74) Vertreter: Müller Schupfner & Partner Patent- und Rechtsanwaltspartnerschaft mbB
(86) Internationale Anmeldenummer: PCT/EP2015/070376
(87) Internationale Veröffentlichungsnummer: WO 2016/037976

(56) Entgegenhaltungen:
- CA-A1- 2 200 647
- US-A- 1 965 267
- US-A- 3 792 434
- US-A1- 2008 084 289

## Beschreibung

Die vorliegende Erfindung betrifft eine Achseinheit, insbesondere zum Einsatz in Nutzfahrzeugen.

Achseinheiten sind aus dem Stand der Technik hinlänglich bekannt. Es ist darüber hinaus bekannt, an Achseinheiten im Bereich der Radaufhängung Zusatzmotoren wie beispielsweise hydraulische Einzelradantriebe anzubringen, um beispielsweise einen Anhänger bei abgehängtem Zugfahrzeug rangieren zu können oder beispielsweise bei großen Steigungen und/oder großer Last zusätzliche Antriebskraft auf die einzelnen Räder übertragen zu können. Dabei ist in der Vergangenheit eine große Verbesserung bereits dadurch erreicht worden, die zur Versorgung des Zusatzantriebes mit entsprechendem Hydraulikfluid nötigen Leitungen in den Achskörper einer starren Achse zu integrieren. Da zweckmäßigerweise die Hydraulikleitungen über den nicht rotierenden Teil einer Radaufhängung an den Zusatzmotor herangeführt werden müssen und dies ohne die Integration der Hydraulikleitungen in den Achskörper eine äußerst aufwendige, fehleranfällige und bauraumintensive Leitungsanordnung bedingen würde, wurden bisher Achskörper verwendet, welche in der Lage waren, Hydraulikleitungen aufzunehmen. Bei diesen Achskörpern hat es sich jedoch als sehr nachteilig erwiesen, da sie ein äußerst hohes Gewicht aufweisen. Darüber hinaus ist das Einbringen der Bohrungen in den Achskörper mit sehr großem Fertigungsaufwand verbunden. Es besteht somit ein Verbesserungsbedarf hinsichtlich der Gewichtsreduzierung von Achskörpern mit integrierten Hydraulikleitungen sowie hinsichtlich der Vereinfachung der Fertigung eines solchen Achskörpers.

Die CA 2,200,647, die US 2008/0084289 A1 und die US 3,792,434 A offenbaren Temperaturüberwachungssysteme, bei denen die elektrischen Kabel der Temperatursensoren durch das Achsrohr hindurch zu dem Achsstummel geführt sind.

Die US 1,965,267 A1 zeigt eine Achse für ein Kraftfahrzeug, bei welcher ein Achsstummel entweder in ein Achsrohr einführbar und festlegbar ist, oder einstückig mit dem Achsrohr ausgeführt ist.

Aufgabe der vorliegenden Erfindung ist es, eine Achseinheit bereitzustellen, welche ein geringes Gewicht und eine einfachere Fertigung erlaubt und dabei die hohen Anforderungen an die Festigkeit und Dauerbelastbarkeit erfüllt. Weiterhin soll ein Fertigungsverfahren zur Herstellung einer Achseinheit angegeben werden, welches einfacher und kostengünstiger durchzuführen ist als die bisher bekannten Fertigungsverfahren.

Diese Aufgaben werden gelöst mit einer Achseinheit gemäß Anspruch 1 sowie einem Verfahren zur Herstellung einer Achseinheit gemäß Anspruch 11. Weitere Vorteile und Merkmale der vorliegenden Erfindung ergeben sich aus den abhängigen Ansprüchen.

Erfindungsgemäß umfasst die Achseinheit einen Achsstummel und eine Rohreinheit, wobei der Achsstummel zumindest bereichsweise rotationssymmetrisch um eine Stummelachse ausgebildet ist und einen Kanal aufweist, welcher sich im Wesentlichen parallel zur Stummelachse erstreckt, wobei die Rohreinheit hohlkörperförmig ausgebildet ist und sich im Wesentlichen längs einer Rohrachse erstreckt, wobei die Rohreinheit eine quer zur Rohrachse verlaufende Ausnehmung bzw. Bohrung aufweist, wobei ein Leitungselement vorgesehen ist, welches fluiddicht mit dem Kanal in Verbindung bringbar und durch die Ausnehmung bzw. Bohrung der Rohreinheit hindurchführbar ist. Die Achseinheit ist vorzugsweise eine starre Achse für ein Nutzfahrzeug, welche dafür ausgelegt ist, über innerhalb der Achseinheit angeordnete Leitungen, wie den Kanal im Achsstummel einen an der Achseinheit angeordneten Zusatzmotor mit dem entsprechenden Antriebsmedium zu versorgen. Dabei ist der Achsstummel der Achseinheit vorzugsweise ein vollkörperförmig ausgebildeter Achsstummel, welcher einen Kanal aufweist, durch welchen beispielsweise ein Hydraulikfluid fließen kann. Vorzugsweise an seiner Außenfläche ist der Achsstummel rotationssymmetrisch zu einer Stummelachse ausgebildet, wobei an dieser Außenfläche beispielsweise die Radnabe eines Fahrzeugrades drehbar relativ zum Achsstummel lagerbar ist oder bevorzugt gelagert ist. Die Anordnung des Kanals innerhalb des Achsstummels derart, dass dieser sich parallel zur Stummelachse erstreckt und somit an den jeweiligen Stirnflächen des Achsstummels endet, ist insofern vorteilhaft, dass keine seitlich in den Achsstummel eingebrachten Bohrungen notwendig sind, welche die Festigkeit des Achsstummels schwächen und welche einen hohen Fertigungsaufwand verursachen würden. So kann es in diesem Zusammenhang vorzugsweise vermieden werden, mit einer seitlich in den Achsstummel einzubringenden Bohrung eine innerhalb des Achsstummels längs der Stummelachse verlaufende Bohrung treffen zu müssen. Die Rohreinheit ist vorzugsweise hohlkörperförmig, das heißt insbesondere bevorzugt hohlzylinderförmig ausgebildet. In einer besonders bevorzugten Ausführungsform ist die Rohreinheit aus mehreren miteinander verbindbaren oder vorzugsweise verbundenen hohlkörperförmigen Segmenten zusammengesetzt. Die Rohreinheit erstreckt sich vorzugsweise im Wesentlichen längs einer Rohrachse und ist besonders bevorzugt zumindest bereichsweise rotationssymmetrisch um die Rohrachse ausgebildet. Weiterhin weist die Rohreinheit eine Ausnehmung bzw. Bohrung auf, welche quer zur Rohrachse oder besonders bevorzugt senkrecht zur Rohrachse in eine Wand der Rohreinheit eingebracht ist. Die Ausnehmung bzw. Bohrung dient dabei insbesondere dazu, das an der zur Rohreinheit weisenden Stirnseite des Achsstummels festlegbare oder vorzugsweise festgelegte Leitungselement aus der Rohreinheit hinausführen zu können. Hierfür ist vorzugsweise die Ausnehmung bzw. Bohrung derart ausgelegt, dass das Leitungselement während der Montage der Achseinheit vom Inneren der Rohreinheit durch die Ausnehmung bzw. Bohrung hindurch nach außen gesteckt werden kann. Das Leitungselement ist besonders bevorzugt eine Hydraulikleitung, beispielsweise ein Hochdruckschlauch, welche primär dafür ausgelegt ist, hohe Drücke eines Hydraulikfluids auszuhalten und dabei eine gewisse Flexibilität aufweist, damit die einfache Montage der Achseinheit und insbesondere das einfache Hindurchführen des Leitungselements durch die Bohrung der Rohreinheit ermöglicht wird. Vorzugsweise steht dabei das Leitungselement im zusammengebauten Zustand der Achseinheit mit dem Kanal des Achsstummels in fluidleitender Verbindung und ist durch die Ausnehmung bzw. Bohrung der Rohreinheit nach außen geführt, um mit seinem dem Achsstummel abgewandten Ende an ein Hydrauliksystem angekoppelt zu sein. Durch die Kombination eines als Vollkörper ausgebildeten Achsstummels gemeinsam mit einer hohlkörperförmig ausgebildeten Rohreinheit lässt sich im Vergleich zu den aus dem Stand der Technik bekannten Lösungen deutlich das Gewicht der Achseinheit reduzieren, da insbesondere der hohlkörperförmige Bereich der Achseinheit bei annähernd gleicher Festigkeit gegenüber Biegung und Torsion ein wesentlich geringeres Gewicht der Achseinheit ermöglicht. Gleichzeitig kann durch die einfache Montage und das einfache Anschließen eines Leitungselements an den Kanal des Achsstummels auf einfache Weise Hydraulikfluid zu einem Zusatzantrieb, welcher an der Achseinheit festlegbar ist, geleitet werden.

Mit Vorteil weist der Achsstummel eine Stummellänge längs der Stummelachse auf, wobei die Rohreinheit eine Rohrlänge längs der Rohrachse aufweist und wobei das Verhältnis von Stummellänge zu Rohrlänge bei 0,1 bis 1,2 vorzugsweise bei 0,2 bis 1 und insbesondere bevorzugt bei 0,4 bis 0,7 liegt. Es hat sich gezeigt, dass das Gewicht der Achseinheit in besonderer Weise reduziert werden kann, wenn das Verhältnis der Stummellänge zur Rohrlänge bei ca. 0,1 bis 1,2 gehalten wird. Gleichzeitig ermöglicht dieses Verhältnis, dass alle erforderlichen Systeme wie Radaufhängung, Bremsträger und Lenkeraufhängung an dem Achsstummel bzw. im Übergangsbereich zwischen Achsstummel und Rohreinheit Platz finden. Versuche der Anmelderin haben gezeigt, dass bei einem Verhältnis der Stummellänge zur Rohrlänge von 0,2 bis 1 insbesondere für die aktuell von Herstellern für Nutzfahrzeuge angefragten Spurweiten unter Verwendung von Standardhalbzeugen für die Achsstummelherstellung besonders gute Gewichtswerte erzielt werden können. Dabei hat es sich als vorteilhaft herausgestellt, dass sowohl Achsstummel, welche zur Festlegung eines Zusatzantriebes ausgelegt sind, als auch Achsstummel, welche für starre Nutzfahrzeugachsen ohne Zusatzantrieb und somit ohne hydraulische Leitungssysteme ausgelegt sind, aus möglichst ein und demselben Typ von Halbzeugen bzw. Achsstummelrohlingen gefertigt werden. Das bevorzugte Verhältnis von Stummellänge zur Rohrlänge von 0,2 bis 1 ermöglichte nach Simulationen durch die Anmelderin insbesondere für diesen Anforderungskatalog besonders geringe Werte für das Gewicht der gesamten Achseneinheit. Für besonders hochbelastete Nutzfahrzeuge hat es sich als vorteilhaft herausgestellt, dass Verhältnis von Stummellänge zur Rohrlänge in einem Verhältnis von 0,4 bis 0,7 zu halten, wobei insbesondere der Minimalwert von 0,4 des Verhältnisses der Stummellänge zur Rohrlänge für einen im Vergleich zur Rohreinheit relativ langen Achsstummel steht. Dies liegt darin begründet, dass für hochbelastete Fahrzeuge, wie beispielsweise Schwerlastanhänger, möglichst kompakte Achseinheiten gefordert werden, bei welcher die Stummellänge nicht weniger als ein 0,4-faches der Rohrlänge sein sollte. Um weiterhin auch bei diesen Fahrzeugen Gewicht einsparen zu können, hat es sich als vorteilhaft gezeigt, den Maximalwert der Stummellänge relativ zur Rohrlänge nicht oberhalb von 0,7 des Verhältnisses der beiden Längen zueinander anzusetzen, da auf diese Weise der Hohlkörperanteil der Achseinheit relativ hoch gehalten wird.

Erfindungsgemäß weist die Rohreinheit einen ersten Fügebereich auf, welcher zur Herstellung einer vorteilhafterweise stoffschlüssigen Verbindung mit dem Achsstummel ausgelegt ist. Die Rohreinheit weist vorzugsweise einen Fügebereich, bevorzugt mit einem Rücksprung auf, in welchen der Achsstummel zumindest bereichsweise einführbar ist und an welchem der Achsstummel im vollständig eingeführten Zustand mit Vorteil anschlägt. Insbesondere bevorzugt ist der Fügebereich der Rohreinheit eine zylinderförmige Innenfläche der Rohreinheit, welche einen größeren Durchmesser aufweist als die benachbart zum Fügebereich angeordnete Innenfläche der Rohreinheit. Bevorzugt für die Ausführung einer Schweißverbindung mit beispielsweise einem thermischen Schweißverfahren, weist der erste Fügebereich eine Anfasung auf, welche zusammenwirkend mit einer entsprechenden Anfasung des Achsstummels das Einbringen eines Schweißgutes zur Herstellung einer Schweißverbindung erleichtert. Alternativ bevorzugt kann der erste Fügebereich auch Kapillarkanäle aufweisen, welche insbesondere dafür ausgelegt sind, ein geschmolzenes Lot entlang des ersten Fügebereiches in einen Zwischenbereich zwischen Rohreinheit und Achsstummel zu leiten, um auf diese Weise eine besonders feste Lötverbindung herzustellen.

Erfindungsgemäß bildet der erste Fügebereich mit einem Stummelfügebereich eine Überlappung, wobei die Überlappung eine Überlappungslänge aufweist, welche in einem Verhältnis von 0,05 bis 0,4, vorzugsweise 0,1 bis 0,3 und besonders bevorzugt von ca. 0,15 bis 0,20 zur Stummellänge steht. Die Überlappung zwischen dem ersten Fügebereich und dem Stummelfügebereich erleichtert die Montage der Achseinheit, da der Achsstummel mit seinem Stummelfügebereich in den ersten Fügebereich der Rohreinheit eingesteckt wird und somit zumindest gegen Verlagerung quer zur Rohrachse relativ zur Rohreinheit gesichert ist. Anschließend kann zwischen dem Achsstummel und der Rohreinheit eine Schweißnaht hergestellt werden, wobei die Überlappungslänge insbesondere einen Hebelarm zur Aufnahme von zwischen Achsstummel und Rohreinheit auftretenden Biegemomenten gewährleistet. Es hat sich dabei gezeigt, dass die Anforderungen an die von der Verbindung zwischen Achsstummel und Rohreinheit aufzunehmenden Biegemomente mit einer Achseinheit insbesondere dann erfüllt werden kann, wenn das Verhältnis der Überlappungslänge zur Stummellänge in einem Bereich von 0,05 bis 0,4 gehalten wird. Das besonders bevorzugte Verhältnis von 0,1 bis 0,3 ermöglicht dabei im Rahmen der vorliegenden Erfindung insbesondere die Einsparung von Gewicht, da das Verhältnis der Überlappungslänge zur Stummellänge nicht größer als 0,3 gewählt ist und gleichzeitig aber mit einem Wert von 0,1 eine ausreichende Überlappung gewährleistet ist, um eine feste Verbindung zwischen dem ersten Fügebereich und dem Stummelfügebereich herzustellen. Für die zuvor genannten hochbelasteten Schwerlast-Nutzfahrzeuge hat sich ein Bereich von 0,15 bis 0,2 bewährt, welcher einerseits eine hohe Festigkeit gewährleistet und andererseits mit einer kompakten Bauweise sowohl der Rohreinheit selbst als auch des Verbindungsbereiches zwischen Achsstummel und Rohreinheit einen guten Kompromiss aus Gewichtseinsparung und der Übertragung besonders hoher Kräfte und Biegemomente ermöglicht.

Weiterhin bevorzugt ist im Bereich der Überlappung des ersten Fügebereiches mit dem Stummelfügebereich ein Spalt vorgesehen, der zu Einbringung eines Adhäsiv geeignet ist. Als Adhäsiv eignet sich im Rahmen der vorliegenden Erfindung insbesondere ein Lot oder ein Klebstoff. Der Spalt zwischen dem ersten Fügebereich und dem Stummelfügebereich erleichtert zudem auch die Montage der Achseinheit, da der Achsstummel und die Rohreinheit ohne größeren Kraftaufwand zusammengesteckt werden können und wobei anschließend ein entsprechendes Adhäsiv in den Spalt eingebracht werden kann, welches eine besonders feste und je nach Überlappungslänge auch besonders großflächige stoffschlüssige Verbindung zwischen dem Achsstummel und der Rohreinheit ermöglicht. Besonders bevorzugt ist dabei die Verwendung eines Adhäsives, da verschiedene Herstellungsmaterialien des Achsstummels und der Rohreinheit auf diese Weise stoffschlüssig miteinander verbunden werden können und somit für den Verbindungsbereich die höchsten Werte für die Festigkeit der Verbindung erzielt werden können. Ein Klebstoff ist bevorzugt, wenn mit möglichst geringem Aufwand und ohne das Erfordernis von Erhitzung eine stoffschlüssige Verbindung hergestellt werden soll.

Mit Vorteil weist der Achsstummel einen Anschlussabschnitt mit Eingriffsmitteln zur Herstellung einer fluiddichten Verbindung zwischen dem Leitungselement und dem Kanal auf. Solche Eingriffsmittel des Anschlussabschnitts können beispielsweise ein Gewinde oder ein Bajonettverschluss sein, welche eine zweckmäßigerweise wieder lösbare form- und/oder kraftschlüssige Verbindung zwischen dem am Achsstummel angeordneten Anschlussabschnitt und einer entsprechenden Eingriffsgeometrie des Leitungselements ermöglichen. Vorteilhaft ist ein formschlüssiger Eingriff, da er ohne Schädigung des Materials wieder gelöst werden kann. Alternativ bevorzugt, um die Lebensdauer der Verbindung zwischen Leitungselement und Kanal möglichst groß zu gestalten, kann alternativ oder zusätzlich zum formschlüssigen Eingriff auch ein stoffschlüssiger Eingriff vorgesehen sein. Es empfiehlt sich hierbei vor allem die Verwendung eines Klebers, welcher insbesondere bevorzugt verschiedene Herstellungsmaterialien des Achsstummels und der entsprechenden Eingriffsgeometrie des Leitungselements stoffschlüssig miteinander verbinden kann. Durch das Herstellen einer stoffschlüssigen Verbindung zwischen dem Leitungselement und dem Anschlussabschnitt am Achsstummel kann vorzugsweise eine wartungsfreie Schnittstelle zwischen dem Achsstummel und dem Leitungselement hergestellt werden.

In einer insbesondere bevorzugten Ausführungsform sind der Achsstummel und die Rohreinheit mittels eines thermischen Schweißverfahrens stoffschlüssig miteinander verbunden. Als thermisches Schweißverfahren soll in diesem Zusammenhang vorzugsweise Schutzgasschweißen, wie beispielsweise Metall-inert-Gasschweißen genannt sein. Je nach den zu verschweißenden Herstellungsmaterialien des Achsstummels und der Rohreinheit kann im Rahmen der vorliegenden Erfindung aber eine Vielzahl verschiedener thermischer Schweißverfahren zum Einsatz gelangen. Das thermische Schweißverfahren eignet sich insbesondere, da der Wärmeeintrag in den Verbindungsbereich zwischen Achsstummel und Rohreinheit sehr gut kontrollierbar ist und auf diese Weise eine Schädigung des Achsstummels, des im Achsstummel angeordneten Kanals sowie des vorzugsweise vorgesehenen Anschlussabschnitts vermieden werden kann. Darüber hinaus ist es einfacher, die Verbindung zwischen Achsstummel und Rohreinheit im Wartungsfall aufzutrennen, als dies beispielsweise wäre, wenn Achsstummel und Rohreinheit mittels eines Reibschweißverfahrens miteinander verbunden werden. Nur wenn die Anforderungen an die Festigkeit der Verbindung zwischen Achsstummel und Rohreinheit wichtiger sind, als die Möglichkeit, diese Verbindung wieder auftrennen zu können und als die Gefährdung des Kanals, sowie des Anschlussabschnitts des Achsstummels durch den hohen Wärmeeintrag beim Reibschweißen, kann es bevorzugt sein, zur Erzielung höherer Verbindungsfestigkeiten ein Rotationsreibschweißverfahren zur Verbindung der Rohreinheit und des Achsstummels einzusetzen.

In einer weiterhin bevorzugten Ausführungsform weist die Rohreinheit im Bereich der Ausnehmung bzw. Bohrung eine Materialverstärkung auf, wobei die Materialverstärkung vorzugsweise eine erste Wandstärke aufweist, die in einem Verhältnis von 1,05 bis 3, bevorzugt von 1,3 bis 2,6 und besonders bevorzugt von ca. 1,5 bis 1,8 zu einer mittleren Rohrwandstärke steht. Die Materialverstärkung dient dabei zum einen dem Ausgleich der durch die Einbringung der Ausnehmung bzw. Bohrung erzeugten Materialschwächung und zum anderen auch gleichzeitig als Anschlag für den Achsstummel, welcher mit seinem Stummelfügebereich in den ersten Fügebereich eingeschoben wird. Die Materialverstärkung ist vorzugsweise benachbart oder besonders bevorzugt unmittelbar angrenzend an den ersten Fügebereich angeordnet. Dabei weist die Materialverstärkung eine erste Wandstärke auf, welche mit Vorteil quer oder bevorzugt senkrecht zur Rohrachse gemessen ist. Die mittlere Rohrwandstärke ist dabei vorzugsweise der Mittelwert von unter Umständen verschiedenen Wandstärken, welche die Rohreinheit außerhalb der Materialverstärkung quer zur Rohrachse aufweist. Je nach Größe und Anzahl der in die Rohreinheit eingebrachten Ausnehmungen bzw. Bohrungen und je nach den aufzunehmenden Biegemomenten ist es bevorzugt, das Verhältnis der ersten Wandstärke zur mittleren Rohrwandstärke in einem Bereich von 1,05 bis 3 zu halten, da auf diese Weise gewährleistet ist, dass die Achseinheit den Anforderungen an die Biegefestigkeit gerecht wird. Der Verhältnisbereich von 1,3 bis 2,6 hat sich dabei insbesondere für eine Anzahl von vier Ausnehmungen bzw. Bohrungen, welche in die Rohreinheit eingebracht sind, bewährt und für diese Anzahl einer entsprechend hohe Biegefestigkeit bei gleichzeitig geringem Gewicht ermöglicht. Der Verhältnisbereich von 1, 5 bis 1,8 ist insbesondere für Schwerlast-Nutzfahrzeuge einzusetzen, wobei insbesondere die Obergrenze des Verhältnisses von 1,8 dafür steht, dass auch die mittlere Rohrwandstärke relativ hohe Werte aufweist und somit nicht erforderlich ist, im Bereich der Materialverstärkung eine um ein Vielfaches höhere erste Wandstärke vorzusehen. Der untere Wert dieses Verhältnisses von 1,5 ist dabei insbesondere erforderlich, um bei hohen auftretenden Lasten einen entsprechenden Ausgleich für an einer Bohrung auftretende Kerbwirkung bereitzustellen.

In einer besonders bevorzugten Ausführungsform umfasst die Rohreinheit ein Achsrohr und ein Zwischenelement, wobei die Ausnehmung bzw. Bohrung, vorzugsweise eine Materialverstärkung, und ein erster Fügebereich an dem Zwischenelement vorgesehen sind, und wobei das Zwischenelement einen zweiten Fügebereich zur Festlegung an dem Achsrohr aufweist. Das Zwischenelement erleichtert mit Vorteil die Montage der Achseinheit, da in einem ersten Schritt Zwischenelement und Achsstummel miteinander verbunden werden können, wobei der Anbindungsabschnitt des Leitungselements an dem Achsstummel weiterhin zugänglich bleibt und wobei anschließend das aus Achsstummel, Zwischenelement und Leitungselement gebildete Halbzeug auf einfache Weise an dem Achsrohr festlegbar ist. Insbesondere bevorzugt ist der Einsatz des Zwischenelements, da auf diese Weise vermieden werden kann, dass das Leitungselement von der zum Achsstummel hin weisenden, offenen Seite des Achsrohres bzw. der Achseinheit in dieser eingefädelt und durch die seitlichen Ausnehmungen bzw. Bohrungen hinausgefädelt werden muss, während die Rohreinheit und der Achsstummel aufeinander zubewegt werden. In vorteilhafter Weise lässt sich mit dem Achsstummel, dem Leitungselement und dem Zwischenelement zunächst der Teil der Achseinheit vorfertigen, welcher die komplexeren Geometrien wie Anschlussabschnitt und die Ausnehmungen bzw. Bohrungen aufweist. Darüber hinaus besteht auch die Möglichkeit, das Zwischenelement mittels eines Reibschweißverfahrens an dem Achsstummel festzulegen und erst anschließend die Leitungselemente durch das Zwischenelement hindurch an dem Achsstummel festzulegen. Besonders bevorzugt ist es, dass die Erstreckung des Zwischenelements längs der Rohrachse oder längs der vorzugsweise kollinear zur Rohrachse ausgerichteten Stummelachse kürzer ist als die Erstreckung des Achsstummels. In einer besonders bevorzugten Ausführungsform weist das Zwischenelement der Reihenfolge nach zunächst den ersten Fügebereich auf, an diesen angrenzend die Materialverstärkung und an dieser angrenzend den zweiten Fügebereich.

Insbesondere bevorzugt ist das Zwischenelement dabei im Wesentlichen rotationssymmetrisch um die Rohrachse ausgebildet. Im Wesentlichen rotationssymmetrisch bedeutet in diesem Zusammenhang, dass kleinere Abweichungen von der Rotationssymmetrie insbesondere verursacht durch die quer zur Rohrachse eingebrachten Ausnehmungen bzw. Bohrungen im Zwischenelement in diesem Zusammenhang unberücksichtigt bleiben sollen. Es hat sich gezeigt, dass rotationssymmetrische Querschnitte die höchsten Festigkeitswerte gegenüber Biegebeanspruchung zeigen und gleichzeitig auch Torsion gegenüber gut standhalten.

In einer besonders bevorzugten Ausführungsform weist der Achsstummel zumindest zwei, vorzugsweise zumindest drei und insbesondere bevorzugt vier Kanäle auf, wobei die Anzahl der Ausnehmungen bzw. Bohrungen vorzugsweise gleich der Anzahl der Kanäle ist. Zur Versorgung eines hydraulischen Zusatzantriebes ist es vorteilhaft, dass der Achsstummel zumindest zwei Kanäle aufweist, wobei einer dieser Kanäle als Druckzuleitung und der andere als Rückleitung für das Hydraulikfluid ausgelegt ist. Dabei kann es für den Antrieb komplexerer Zusatzmotoren auch bevorzugt sein, zumindest drei Kanäle im Achsstummel anzuordnen, wobei zwei Kanäle als Druckzuleitung und ein dritter Kanal als gemeinsame Rückleitung für Hydraulikfluid einsetzbar ist. In einer besonders bevorzugten Ausführungsform ist ein vierter Kanal vorgesehen, durch welchen ein erhitztes Hydraulikfluid in den Zusatzantrieb einleitbar ist, um bei besonders tiefen Außentemperaturen das Erreichen der nötigen Betriebstemperatur des hydraulischen Zusatzantriebes zu ermöglichen bzw. zu beschleunigen. Besonders bevorzugt ist dabei die Zahl der Ausnehmungen bzw. Bohrungen an die Anzahl der Kanäle angepasst, um insbesondere nicht zwei oder mehrere Leitungen durch eine besonders groß ausgelegte Ausnehmung bzw. Bohrung hindurchführen zu müssen und auf diese Weise die Festigkeit der Rohreinheit in diesem Bereich drastisch zu reduzieren. Mit Vorteil sind die Ausnehmungen bzw. Bohrungen gleichmäßig über den Umfang der Rohreinheit im Bereich angrenzend an den Achsstummel verteilt angeordnet.

In einer bevorzugten Ausführungsform weist die Achseinheit zwei Achsstummel und eine Rohreinheit auf, wobei an je einer Seite der Rohreinheit ein Achsstummel festlegbar ist. Vorzugsweise ist die Achseinheit als starre Achse mit einem hohlkörperförmigen Abschnitt, vorzugsweise der Rohreinheit, ausgebildet, wobei an jedem Ende der Rohreinheit ein Achsstummel angeordnet ist. Besonders bevorzugt sind die Achsstummel dabei durch ein Schweißverfahren an der Rohreinheit festgelegt. Mit Vorteil ist durch einen großen Anteil der Rohreinheit an der gesamten Achseinheit das Gewicht der Achseinheit reduziert, da die Rohreinheit besonders bevorzugt hohlkörperförmig ausgebildet ist.

Besonders bevorzugt ist die Rohreinheit zumindest teilweise aus anderem Material hergestellt als der Achsstummel. So kann es erwünscht sein, beispielsweise das Zwischenelement und/oder das Achsrohr vorzugsweise aus leichterem Metall, wie Aluminium herzustellen. Insbesondere wenn die Richtungen der auf die Achseinheit einwirkenden Biegemomente bekannt ist, kann vorzugsweise ein Faserverbundmaterial eingesetzt werden, welches in bestimmten Richtungen eine höhere Zugfestigkeit aufweist als einfaches homogenes Material, wie beispielsweise ein Gussstahl. Insbesondere bevorzugt kann in diesem Zusammenhang auch der Einsatz von Glare, einem faserverstärkten Aluminiumwerkstoff sein, da dieser zum einen eine geringe Dichte aufweist und zum anderen in Längsrichtung der eingegossenen Fasern eine besonders hohe Zugfestigkeit.

Erfindungsgemäß ist ein Verfahren zur Herstellung einer Achseinheit vorgesehen, umfassend die Schritte:
- Bereitstellen eines Achsstummels mit einem Kanal, einer Rohreinheit und einem Leitungselement;
- Festlegen des Leitungselements an einem Anschlussabschnitt des Achsstummels, um eine fluiddichte Verbindung zwischen dem Leitungselement und dem Kanal herzustellen;
- Hindurchführen des Leitungselements durch eine Ausnehmung bzw. Bohrung der Rohreinheit;
- Festlegen der Rohreinheit an dem Achsstummel.
Das vorgeschlagene Verfahren reduziert erheblich den Montageaufwand im Vergleich zu den bisher aus dem Stand der Technik bekannten Verfahren zur Herstellung einer Achseinheit, bei welcher ein Zusatzantrieb über innerhalb der Achseinheit angeordnete Hydraulikleitungen mit Hydraulikfluid versorgt werden kann. So kann in einer ersten bevorzugten Variante des Verfahrens das Leitungselement zunächst am Achsstummel festgelegt werden und anschließend durch eine Ausnehmung bzw. Bohrung an der Rohreinheit hindurchgeführt werden, um schließlich Achsstummel und Rohreinheit aneinander festzulegen. Diese einfache Art und Weise der Fertigung ermöglicht es, einem einzelnen Monteur zunächst nur den Achsstummel und das Leitungselement handhaben zu müssen und in einem nächsten Schritten den Verbund aus Achsstummel und Leitungselement an der Rohreinheit anzuordnen und an dieser beispielsweise festzuschweißen.

Insbesondere bevorzugt wird zur Festlegung der Rohreinheit am Achsstummel ein thermisches Schweißverfahren eingesetzt. In diesem Zusammenhang hat sich insbesondere Schutzgasschweißen bewährt, da es zum einen kostengünstig ist und zum anderen eine hohe Schweißnahtgüte erlaubt. Weiterhin ist Schutzgasschweißen auch für die meisten der zur Herstellung einer Achseinheit üblichen Metalle geeignet.

Vorzugsweise umfasst die während des Verfahrens bereitgestellte Rohreinheit ein Achsrohr und ein Zwischenelement, wobei die Ausnehmung bzw. Bohrung am Zwischenelement vorgesehen ist, wobei zunächst der Achsstummel am Zwischenelement festgelegt wird und wobei anschließend das Achsrohr an der dem Achsstummel gegenüber liegenden Seite des Zwischenelements festgelegt wird. Zur weiteren Vereinfachung der Fertigung der Achseinheit ist ein Zwischenelement vorgesehen, welches zwischen einem Achsrohr und dem Achsstummel angeordnet werden kann und welches die Ausnehmung bzw. Bohrung zum nach Außen führen des Leitungselements aufweist. Mit Vorteil kann der Monteur zunächst Achsstummel, Leitungselement und Zwischenelement miteinander verbinden und anschließend den Verbund dieser drei Teile an dem Achsrohr festlegen. Dieses Verfahren zeichnet sich dadurch aus, dass der Monteur zunächst nur eine kleinere Baugruppe beispielsweise auf einer kleineren Werkbank hantieren kann und erst zum Abschluss es Herstellungsverfahrens das relativ große Achsrohr an dem Verbund aus Zwischenelement, Achsstummel und Leitungselement festlegt. Besonders bevorzugt wird nach Bereitstellen des Achsstummels das Zwischenelement am Achsstummel festgelegt, wobei anschließend das Leitungselement mit dem Kanal des Achsstummels verbunden und durch die Ausnehmung bzw. Bohrung aus dem Zwischenelement nach außen geführt wird, wobei anschließend das Achsrohr am Zwischenelement festgelegt wird. Bei dieser bevorzugten Ausführungsform ist es möglich, das Zwischenelement an dem Achsstummel mittels eines Rotationsreibschweißverfahrens festzulegen, wobei Zwischenelement und Achsstummel um die Stummelachse bzw. um die Rohrachse relativ zueinander in Rotation versetzt werden und in einem ersten Fügebereich bzw. im Stummelfügebereich gegeneinander gepresst und aneinander verschweißt werden. Erst nach Abschluss dieses Verfahrensschrittes kann der Monteur das Leitungselement

durch die Ausnehmung bzw. Bohrung am Zwischenelement hindurchführen und am Achsstummel festlegen. Der Verbund aus Achsstummel, Leitungselement und

Zwischenelement kann in einem letzten Schritt dieses bevorzugten Verfahrens am Achsrohr festgelegt werden.

Bevorzugt kommt zur Festlegung des Zwischenelements am Achsstummel ein Reibschweißverfahren zum Einsatz. Das Reibschweißen erzielt im Allgemeinen eine größere Verschweißungszone zwischen den zu schweißenden Bauteilen als das thermische Schweißen, wodurch eine festere Verbindung hergestellt wird. Es ist bevorzugt, das Reibschweißen dabei im Zwischenbereich zwischen Zwischenelement und Achsstummel vorzusehen und nicht im Bereich zwischen Zwischenelement und Achsrohr, da ein möglicherweise notwendiges Auftrennen zu Wartungszwecken somit im Bereich zwischen Zwischenelement und Achsrohr leichter möglich ist als im Bereich zwischen Zwischenelement und Achsstummel. Bevorzugt wird im Wartungsfall der Verbund aus Stummel und Zwischenelement gemeinsam vom Achsrohr getrennt und aufgehoben, da der Achsstummel aufgrund der komplizierteren Geometrie einen höheren Herstellungsaufwand benötigt als das Achsrohr. Somit ist es bevorzugt, bei einer Demontage der Achseinheit den Achsstummel zu erhalten, wobei der Bereich zwischen Zwischenelement und Achsrohr aufgetrennt wird und beispielsweise erneut ein zweiter Fügebereich mittels eines spanenden Verfahrens hergestellt wird.

Bevorzugt wird alternativ oder zusätzlich zu einer Schweißverbindung eine Klebeverbindung hergestellt, um den Achsstummel an der Rohreinheit festzulegen. Eine Klebeverbindung ist insbesondere dann bevorzugt, wenn verschiedene Materialien des Achsstummel und der Rohreinheit miteinander verbunden werden sollen, in diesem Fall ersetzt die Klebeverbindung vorzugsweise eine Schweißverbindung. Besonders bevorzugt ist zwischen dem Achsstummel und der Rohreinheit ein Überlappungsbereich vorgesehen, wobei ein erster Abschnitt des Überlappungsbereiches für die Herstellung einer Klebeverbindung ausgelegt sein kann und ein zweiter Abschnitt, vorzugsweise ausreichend beabstandet vom ersten Überlappungsabschnitt der Herstellung einer Schweißverbindung dient. Auf diese Weise lassen sich die Vorteile der verschiedenen Verfahren zur Herstellung einer stoffschlüssigen Verbindung kombinieren und somit mit relativ geringem Aufwand die Kosten zur Herstellung der Achseinheit reduzieren und deren Qualität erhöhen.

Weitere Vorteile und Merkmale der vorliegenden Erfindung ergeben sich aus der nachfolgenden Beschreibung mit Bezug auf die beigefügten Figuren. Es versteht sich dabei, dass einzelne in einzelnen Ausführungsformen gezeigte Merkmale auch in den alternativen Ausführungsformen bevorzugt sein können, sofern dies nicht explizit ausgeschlossen ist oder sich aufgrund technischer Sachverhalte ergibt.

Es zeigen:
- Fig. 1: eine teilweise geschnittene Ansicht einer bevorzugten Ausführungsform der erfindungsgemäßen Achseinheit,
- Fig. 2: eine teilweise geschnittene Ansicht einer weiteren bevorzugten Ausführungsform der erfindungsgemäßen Achseinheit,
- Fig. 3A - 3C: die Schritte einer bevorzugten Variante des erfindungsgemäßen Verfahrens zur Herstellung einer Achseinheit.

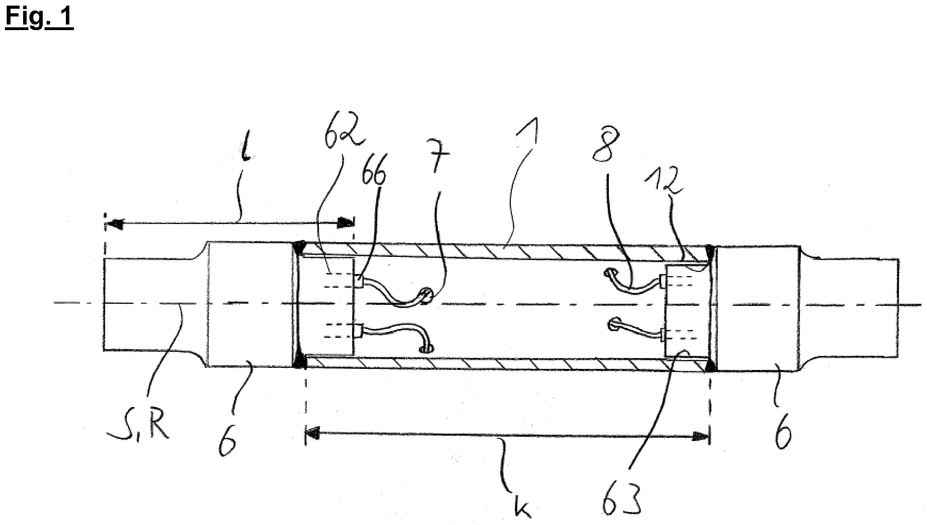

Die in Fig. 1 gezeigte bevorzugte Ausführungsform der erfindungsgemäßen Achseinheit weist eine Rohreinheit 1 sowie bevorzugt zwei an der Rohreinheit festgelegte Achsstummel 6 auf. Die Achsstummel 6 sind vorzugsweise identisch ausgebildet, wobei in der nachfolgenden Beschreibung jeweils nur auf einen Achsstummel 6 Bezug genommen werden soll. Der Achsstummel 6 weist eine Stummellängel auf, wobei die Stummellänge l im Wesentlichen längs oder parallel zur Stummelachse S gemessen wird. In dem zusammengebauten Zustand der Achseinheit ist die Stummelachse S vorzugsweise kollinear zu einer Rohrachse R, wie in der Figur dargestellt, ausgerichtet. Die Rohreinheit 1 erstreckt sich dabei im Wesentlichen längs der Rohrachse R und ist vorzugsweise zumindest bereichsweise rotationssymmetrisch um die Rohrachse R ausgebildet. Der Achsstummel 6 weist vorzugsweise einen Stummelfügebereich 63 auf, welcher zumindest abschnittsweise in einen ersten Fügebereich 12 der Rohreinheit 1 eingefügt ist. Weiterhin weist der Achsstummel 6 vorzugsweise zwei in der Figur nur schematisch dargestellte Kanäle 62 auf, welche sich innerhalb des Achsstummels 6 längs der Stummelachse S erstrecken. An der zur Rohreinheit 1 hin weisenden Seite des Achsstummels 6 weist jeder Kanal 62 einen Anschlussabschnitt 66 auf, welcher zur Festlegung eines Leitungselements 8 dient. Das Leitungselement 8 ist dabei fluiddicht mit dem Kanal 62 verbunden. In der Figur dargestellt sind vier Leitungselemente 8, wobei nur an einem das Bezugszeichen angefügt wurde. Die Leitungselemente 8 werden durch je eine Ausnehmung bzw. Bohrung 7 quer zur Rohrachse R aus der Rohreinheit 1 hinausgeführt. Durch die Anordnung der Anschlussabschnitte 66 an der nach innen weisenden Stirnseite des Achsstummels 6 ist es möglich, dessen Biegefestigkeit deutlich zu erhöhen, da keine quer zur Stummelachse S verlaufenden Bohrungen in den Achsstummel 6 eingebracht werden müssen. Besonders bevorzugt weist die Rohreinheit 1 eine Rohrlänge k auf, welche im Wesentlichen längs oder parallel der Rohrachse R gemessen wird. Weiterhin wird deutlich, dass zwischen dem Stummelfügebereich 63 und dem ersten Fügebereich 12 ein Spalt verbleibt, wobei zur Unterstützung der ebenfalls deutlich gekennzeichneten Schweißnaht zwischen der Rohreinheit 1 und dem Achsstummel 6 zusätzlich noch ein Adhäsiv in diesem Spalt vorgesehen sein kann, welches die Festigkeit der Verbindung von Achsstummel und Rohreinheit erhöht.

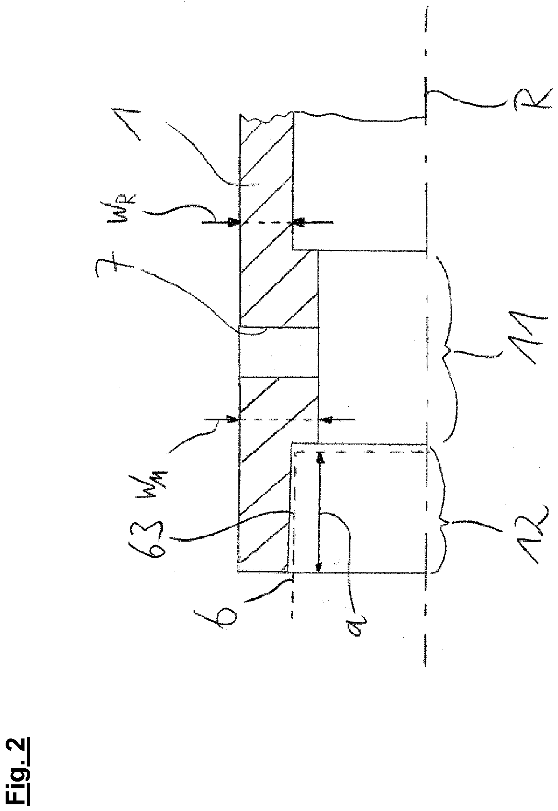

Fig. 2 zeigt eine Detailansicht der Rohreinheit 1, wobei diese auf der linken Seite einen ersten Fügebereich 12 an diesen angrenzend eine Materialverstärkung 11 und im Bereich der Materialverstärkung 11 eine Ausnehmung bzw. Bohrung 7 aufweist. Weiterhin gekennzeichnet ist die erste Wandstärke w_{M} im Bereich der Materialverstärkung 11, welche sich im Wesentlichen quer oder bevorzugt senkrecht zur Rohrachse R erstreckt. Dabei ist die erste Wandstärke w_{M} größer als die mittlere Wandstärke w_{R} der Rohreinheit 1 in den in der Figur rechts liegenden Bereichen, welche nicht vollständig dargestellt sind. Weiterhin ist gezeigt, dass in den ersten Fügebereich 12 der Achsstummel 6 mit seinem Stummelfügebereich 63 einschiebbar ist, wobei eine Überlappung mit einer Überlappungslänge a gebildet ist.

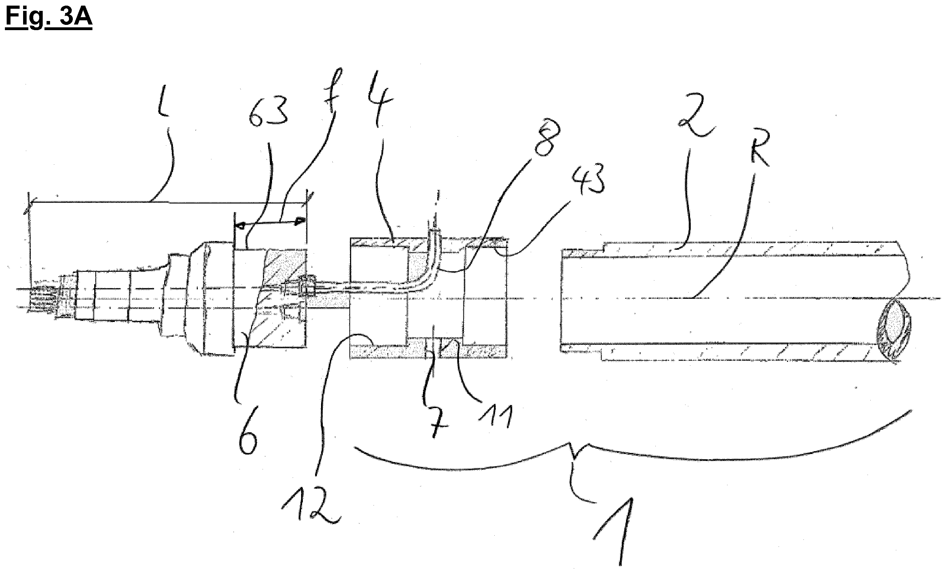

Fig. 3A zeigt den vorzugsweise ersten Schritt des Herstellungsverfahrens zur Herstellung einer Achseinheit, wobei ein Achsstummel 6 und eine Rohreinheit 1 bereitgestellt werden und wobei ein Leitungselement 8 an dem Achsstummel festgelegt wird und durch die Ausnehmung bzw. Bohrung 7 in der Rohreinheit 1 hindurchgeführt wird. Die Rohreinheit 1 besteht im vorliegenden bevorzugten Beispiel aus einem Zwischenelement 4 und einem Achsrohr 2, wobei im ersten Verfahrensschritt zunächst das Zwischenelement 4 an dem Achsstummel 6 festgelegt wird. Auf seiner linken Seite weist das Zwischenstück 4 einen ersten Fügebereich 12 auf, in welchen der Achsstummel 6 mit seinem Stummelfügebereich 63 eingefügt wird. Der Stummelfügebereich weist eine Fügelänge f auf, die im Wesentlichen gleich der Erstreckung des ersten Fügebereiches 12 längs der Rohrachse R ist

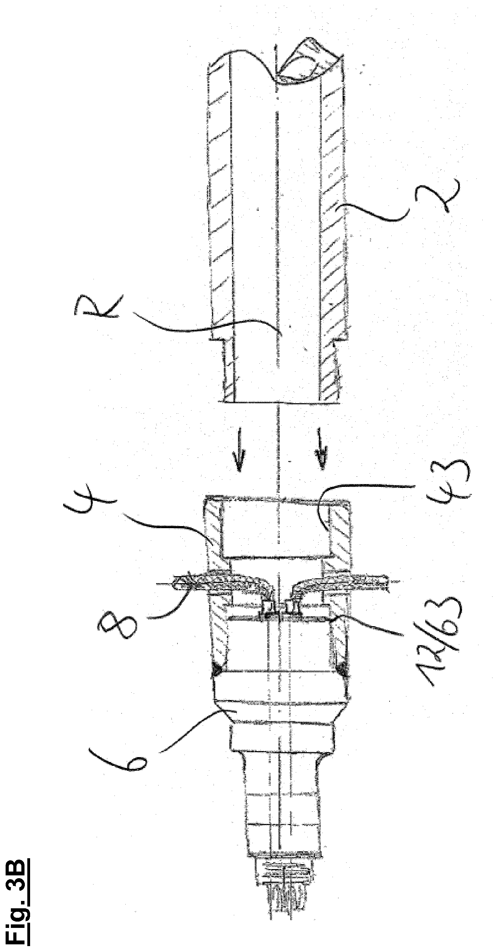

Fig. 3B zeigt den nächsten Verfahrensschritt des bevorzugten Verfahrens zur Herstellung einer Achseinheit, wobei das Zwischenelement 4 mittels einer Schweißverbindung am Achsstummel 6 festgelegt wurde. Das Achsrohr 2 wird in einen zweiten Fügebereich 43 des Zwischenelements 4 eingesetzt.

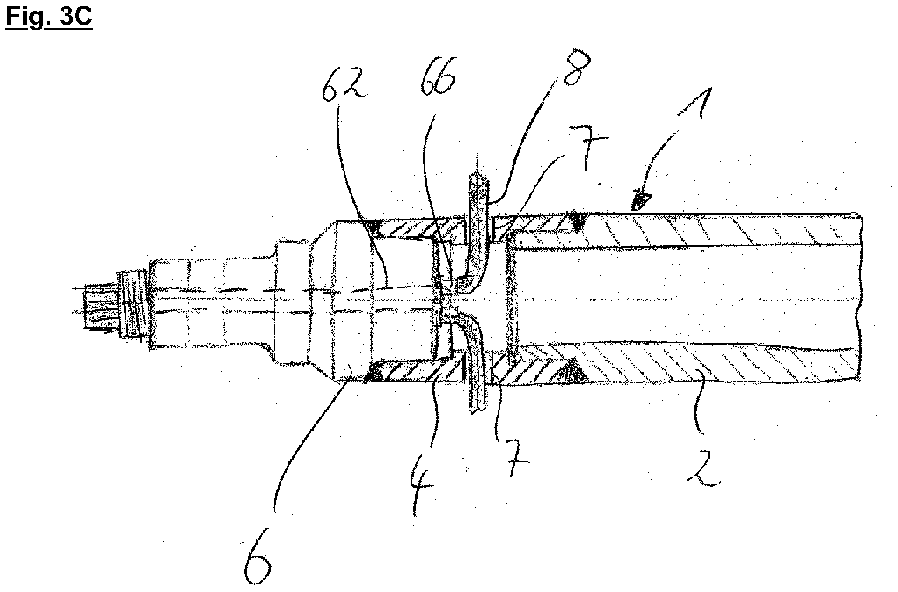

Fig. 3C zeigt die bevorzugte Ausführungsform der erfindungsgemäßen Achseinheit nach Abschluss des letzten Verfahrensschrittes des bevorzugten Verfahrens zur Herstellung der Achseinheit. Dabei ist abschließend das Achsrohr mittels einer Schweißverbindung am Zwischenelement 4 festgelegt worden.

### Bezuqszeichen:

- 1: - Rohreinheit
- 2: - Achsrohr
- 4: - Zwischenelement
- 6: - Achsstummel
- 7: - Ausnehmung
- 8: - Leitungselement
- 11: - Materialverstärkung
- 12: - erster Fügebereich
- 43: - zweiter Fügebereich
- 62: - Kanal
- 63: - Stummelfügebereich
- 64: - erster Anschlussabschnitt
- 66: - zweiter Anschlussabschnitt
- 68: - Befestigungsabschnitt
- a: - Überlappungslänge
- f: - Fügelänge
- k: - Rohrlänge
- l: - Stummellänge
- R: - Rohrachse
- S: - Stummelachse

## Patentansprüche

1. Achseinheit, umfassend einen Achsstummel (6) und eine Rohreinheit (1), wobei der Achsstummel (6) zumindest bereichsweise rotationssymmetrisch um eine Stummelachse (S) ausgebildet ist und einen Kanal (62) aufweist, welcher sich im Wesentlichen parallel zur Stummelachse (S) erstreckt,
wobei die Rohreinheit (1) hohlkörperförmig ausgebildet ist und sich im Wesentlichen längs einer Rohrachse (R) erstreckt,
wobei die Rohreinheit (1) eine quer zur Rohrachse (R) verlaufende Ausnehmung (7) aufweist,
wobei ein Leitungselement (8) vorgesehen ist, welches fluiddicht mit dem Kanal (62) in Verbindung bringbar und durch die Ausnehmung (7) der Rohreinheit (1) hindurchführbar ist,
**dadurch gekennzeichnet, dass** das Leitungselement (8) eine Hydraulikleitung ist,
wobei die Rohreinheit (1) einen ersten Fügebereich (12) aufweist, welcher zur Herstellung einer Verbindung mit dem Achsstummel (6) ausgelegt ist, und
wobei der erste Fügebereich (12) mit einem Stummelfügebereich (63) eine Überlappung bildet,
wobei die Überlappung eine Überlappungslänge (a) aufweist, welche in einem Verhältnis von 0,05 bis 0,4 zur Stummellänge (I) steht.

2. Achseinheit nach Anspruch 1,
wobei der Achsstummel (6) eine Stummellänge (l) längs der Stummelachse (S) aufweist,
wobei die Rohreinheit (1) eine Rohrlänge (k) längs der Rohrachse (R) aufweist, und
wobei das Verhältnis von Stummellänge (I) zu Rohrlänge (k) bei 0,1 bis 1,2, vorzugsweise bei 0,2 bis 1 und insbesondere bevorzugt bei ca. 0,4 bis 0,7 liegt.

3. Achseinheit nach einem der vorhergehenden Ansprüche,
wobei der erste Fügebereich (12) zur Herstellung einer stoffschlüssigen Verbindung mit dem Achsstummel (6) ausgelegt ist.

4. Achseinheit nach Anspruch 2 und 3,
wobei der erste Fügebereich (12) mit einem Stummelfügebereich (63) eine Überlappung bildet,
wobei die Überlappung eine Überlappungslänge (a) aufweist, welche in einem Verhältnis von 0,1 bis 0,3 und besonders bevorzugt von ca. 0,15 bis 0,20 zur Stummellänge (I) steht.

5. Achseinheit nach Anspruch 4,
wobei im Bereich der Überlappung des ersten Fügebereiches (12) mit dem Stummelfügebereich (63) ein Spalt vorgesehen ist, der zu Einbringung eines Adhäsivs geeignet ist.

6. Achseinheit nach einem der vorhergehenden Ansprüche,
wobei der Achsstummel (6) einen Anschlussabschnitt (66) mit Eingriffsmitteln zur Herstellung einer fluiddichten Verbindung zwischen dem Leitungselement (8) und dem Kanal (62) aufweist.

7. Achseinheit nach einem der vorhergehenden Ansprüche,
wobei die Rohreinheit (1) im Bereich der Ausnehmung (7) eine Materialverstärkung (11) aufweist, und
wobei die Materialverstärkung (11) vorzugsweise eine erste Wandstärke (w_{M}) aufweist, die in einem Verhältnis von 1,05 bis 3, bevorzugt von 1,3 bis 2,6 und besonders bevorzugt von ca. 1,5 bis 1,8 zu einer mittleren Rohrwandstärke w_{R}) steht.

8. Achseinheit nach einem der vorhergehenden Ansprüche,
wobei die Rohreinheit (1) ein Achsrohr (2) und ein Zwischenelement (4) umfasst,
wobei die Ausnehmung (7) und ein erster Fügebereich (12) an dem Zwischenelement (4) vorgesehen sind, und
wobei das Zwischenelement (4) einen zweiten Fügebereich (43) zur Festlegung an dem Achsrohr (2) aufweist.

9. Achseinheit nach einem der vorhergehenden Ansprüche,
wobei der Achsstummel (6) zumindest zwei, vorzugsweise zumindest drei und insbesondere bevorzugt vier Kanäle (62) aufweist,
wobei vorzugsweise die Anzahl der Ausnehmungen (7) gleich der Anzahl der Kanäle (62) ist.

10. Achseinheit nach einem der vorhergehenden Ansprüche,
wobei zwei Achsstummel (6) und eine Rohreinheit (1) vorgesehen sind, wobei an je einer Seite der Rohreinheit (1) ein Achsstummel festlegbar ist.

11. Verfahren zur Herstellung einer Achseinheit umfassend die Schritte:
a) Bereitstellen eines Achsstummels (6) mit einem Kanal (62) und einem Stummelfügebereich (63), einer Rohreinheit (1) mit einem erstem Fügebereich (12) und einem Leitungselement (8);
b) Festlegen des Leitungselements (8) an einem Anschlussabschnitt (66) des Achsstummels (6), um eine fluiddichte Verbindung zwischen dem Leitungselement (8) und dem Kanal (62) herzustellen;
c) Hindurchführen des Leitungselements (8) durch eine Ausnehmung (7) der Rohreinheit (1);
d) Festlegen der Rohreinheit (1) an dem Achsstummel (6);
**dadurch gekennzeichnet, dass** das Verfahren folgenden Schritt beinhaltet:
e) Sichern des Achsstummels (6) gegen Verlagerung quer zu einer Rohrachse (R) relativ zur Rohreinheit (1) durch Stecken des Stummelfügebereiches (63) in den ersten Fügebereich (12), derart dass der Stummelfügebereich (63) und der erste Fügebereich (12) eine Überlappung bilden, welche eine Überlappungslänge (a) aufweist, welche in einem Verhältnis von 0,05 bis 0,4 zur Stummellänge (I) steht.

12. Verfahren nach Anspruch 11,
wobei zur Festlegung der Rohreinheit (1) am Achsstummel (6) ein thermisches Schweißverfahren eingesetzt wird.

13. Verfahren nach einem der Ansprüche 11 oder 12,
wobei die Rohreinheit (1) ein Achsrohr (2) und ein Zwischenelement (4) umfasst, wobei die Ausnehmung (7) am Zwischenelement (4) vorgesehen ist, wobei zunächst der Achsstummel (6) am Zwischenelement (4) festgelegt wird, und
wobei anschließend das Achsrohr (2) an der dem Achsstummel (6) gegenüberliegenden Seite des Zwischenelements (4) festgelegt wird.

14. Verfahren nach Anspruch 13,
wobei nach Bereitstellen des Achsstummels (6) das Zwischenelement (4) am Achsstummel (6) festgelegt wird,
wobei anschließend das Leitungselement (8) mit dem Kanal (62) des Achsstummels (6) verbunden und durch die Ausnehmung (7) aus dem Zwischenelement (4) nach außen geführt wird,
wobei anschließend das Achsrohr (2) am Zwischenelement (4) festgelegt wird.

15. Verfahren nach einem der Ansprüche 13 oder 14,
wobei zur Festlegung des Zwischenelements 4) am Achsstummel (6) Reibschweißen zum Einsatz kommt.

## Claims

1. An axle unit comprising a stub axle (6) and a tube unit (1),
wherein the stub axle (6) at least in regions is configured rotationally symmetrically about a stub axis (S) and has a channel (62) which extends substantially parallel to the stub axis (S),
wherein the tube unit (1) is configured as a hollow body and extends substantially along a tube axis (R),
wherein the tube unit (1) has a recess (7) running transversely to the tube axis (R),
wherein a line element (8) is provided which can be brought into fluid-tight connection with the channel (62) and can be passed through the recess (7) of the tube unit (1),
**characterized in that** the line element (8) is a hydraulic line,
wherein the tube unit (1) has a first joining region (12) which is configured for creating a connection to the stub axle (6), and
wherein the first joining region (12) forms an overlap with a stub joining region (63),
wherein the overlap has an overlap length (a) which stands in a ratio of 0.05 to 0.4 to the stub length (I).

2. The axle unit according to claim 1,
wherein the stub axle (6) has a stub length (I) along the stub axis (S),
wherein the tube unit (1) has a tube length (k) along the tube axis (R), and
wherein the ratio of the stub length (I) to the tube length (k) is 0.1 to 1.2, preferably 0.2 to 1, and particularly preferably approximately 0.4 to 0.7.

3. The axle unit according to any one of the preceding claims, wherein the first joining region (12) is configured for creating a substance-bonded connection to the stub axle (6).

4. The axle unit according to claim 2 and 3,
wherein the first joining region (12) forms an overlap with a stub joining region (63),
wherein the overlap has an overlap length (a) which stands in a ratio of 0.1 to 0.3 to the stub length (I), and particularly preferably approximately 0.15 to 0.20 to the stub length (I).

5. The axle unit according to claim 4, wherein a gap is provided in the region of the overlap of the first joining region (12) to the stub joining region (63), which gap is suitable for introduction of an adhesive.

6. The axle unit according to any of the preceding claims, wherein the stub axle (6) has a connecting portion (66) with engagement means for creating a fluid-tight connection between the line element (8) and the channel (62).

7. The axle unit according to any of the preceding claims,
wherein the tube unit (1) has a material reinforcement (11) in the region of the recess (7), and
wherein the material reinforcement (11) preferably has a first wall thickness (w_{M})which stands in a ratio of 1.05 to 3, preferably 1.3 to 2.6, and particularly preferably approximately 1.5 to 1.8 to a mean tube wall thickness (w_{R}).

8. The axle unit according to any of the preceding claims,
wherein the tube unit (1) comprises an axle tube (2) and an intermediate element (4),
wherein the recess (7) and a first joining region (12) are provided on the intermediate element (4), and
wherein the intermediate element (4) has a second joining region (43) for securing to the axle tube (2).

9. The axle unit according to any of the preceding claims,
wherein the stub axle (6) has at least two, preferably at least three and particularly preferably four channels (62),
wherein preferably the number of recesses (7) is equal to the number of channels (62).

10. The axle unit according to any of the preceding claims,
wherein two stub axles (6) and one tube unit (1) are provided,
wherein a stub axle can be secured to each side of the tube unit (1).

11. Method for production of an axle unit, comprising the steps:
a) provision of a stub axle (6) with a channel (62) and a stub joining region (63), a tube unit (1) having a first joining region (12), and a line element (8);
b) securing the line element (8) to a connecting portion (66) of the stub axle (6) in order to create a fluid-tight connection between the line element (8) and the channel (62);
c) guiding the line element (8) through a recess (7) of the tube unit (1);
d) securing the tube unit (1) to the stub axle (6),
**characterized in that** the method includes the following step:
e) securing the stub axle (6) against displacement relative to the tube unit (1) transversely to a tube axis (R) by pushing the stub joining region (63) into the first joining region (12) such that the stub joining region (63) and the the first joining region (12) form an overlap, wherein the overlap has an overlap length (a) which stands in a ratio of 0.05 to 0.4 to the stub length (I).

12. The method according to claim 11, wherein a thermal welding process is used to secure the tube unit (1) to the stub axle (6).

13. The method according to any one of claims 11 or 12,
wherein the tube unit (1) comprises an axle tube (2) and an intermediate element (4),
wherein the recess (7) is provided on the intermediate element (4),
wherein firstly the stub axle (6) is secured to the intermediate element (4), and
wherein then the axle tube (2) is secured to the side of the intermediate element (4) opposite the stub axle (6).

14. The method according to claim 13,
wherein after provision of the stub axle (6), the intermediate element (4) is secured to the stub axle (6),
wherein then the line element (8) is connected to the channel (62) of the stub axle (6) and guided towards the outside through the recess (7) out of the intermediate element (4),
wherein then the axle tube (2) is secured to the intermediate element (4).

15. The method according to any one of claims 13 or 14, wherein friction welding is used to secure the intermediate element (14) to the stub axle (6).

## Revendications

1. Unité d'essieu comprenant une fusée d'essieu (6) et une unité de tube (1),
dans laquelle la fusée d'essieu (6) est réalisée, au moins dans certaines zones, avec une symétrie de révolution autour d'un axe de fusée (S) et présente un canal (62) qui s'étend sensiblement parallèlement à l'axe de fusée (S),
dans laquelle l'unité de tube (1) est réalisée sous forme de corps creux et s'étend sensiblement le long d'un axe de tube (R),
dans laquelle l'unité de tube (1) présente un évidement (7) orienté sensiblement dans une direction transversale à l'axe de tube (R),
dans laquelle il est prévu un élément de conduite (8) qui peut être amené en connexion avec le canal (62) de manière étanche ou fluide et qui peut être passé à travers l'évidement (7) de l'unité de tube (1),
**caractérisée en ce que** l'élément de conduite (8) est une conduite hydraulique,
dans laquelle l'unité de tube (1) présente une première zone de joint (12) qui est définie pour réaliser une connexion avec la fusée d'essieu (6), et dans laquelle la première zone de joint (12) forme un chevauchement avec une zone de joint de fusée (63),
dans laquelle le chevauchement présente une longueur de chevauchement (a) qui se trouve dans un rapport de 0,05 à 0,4 par rapport à la longueur de fusée (I).

2. Unité d'essieu selon la revendication 1,
dans laquelle la fusée d'essieu (6) présente une longueur de fusée (I) le long de l'axe de fusée (S),
dans laquelle l'unité de tube (1) présente une longueur de tube (k) le long de l'axe de tube (R), et
dans laquelle le rapport de la longueur de fusée (I) sur la longueur du tube (k) est de 0,1 à 1,2, de préférence de 0,2 à 1, et de toute préférence d'environ 0,4 à 0,7.

3. Unité d'essieu selon l'une des revendications précédentes,
dans laquelle la première zone de joint (12) est définie pour réaliser une connexion avec la fusée d'essieu (6) par coopération de matériau.

4. Unité d'essieu selon les revendications 2 et 3,
dans laquelle la première zone de joint (12) forme un chevauchement avec une zone de joint de fusée (63),
dans laquelle le chevauchement présente une longueur de chevauchement (a) qui se trouve dans un rapport de 0,1 à 0,3 et de préférence d'environ 0,15 à 0,20 par rapport à la longueur de fusée (I).

5. Unité d'essieu selon la revendication 4,
dans laquelle, dans la zone de chevauchement de la première zone de joint (12) avec la zone de joint de fusée (63), il est prévu une fente qui est adaptée pour l'introduction d'un adhésif.

6. Unité d'essieu selon l'une quelconque des revendications précédentes,
dans laquelle la fusée d'essieu (6) présente une section de raccordement (66) avec des moyens d'engagement pour réaliser une connexion entre l'élément de conduite (8) et le canal (62) de manière étanche ou fluide.

7. Unité d'essieu selon l'une des revendications précédentes,
dans laquelle l'unité de tube (1) présente un renforcement de matériau (11) dans la zone de l'évidement (7), et
dans laquelle le renforcement de matériau (11) présente de préférence une première épaisseur de paroi (w_{M})qui se trouve dans un rapport de 1,05 à 3, de préférence de 1,3 à 2,6 et de toute préférence d'environ 1,5 à 1,8 par rapport à une épaisseur de paroi de tube moyenne (w_{R}).

8. Unité d'essieu selon l'une des revendications précédentes,
dans lequel l'unité de tube (1) comprend un tube d'essieu (3) et un élément intermédiaire (4),
dans laquelle l'évidement (7) et une première zone de joint (12) sont prévus au niveau de l'élément intermédiaire (4), et
dans laquelle l'élément intermédiaire (4) présente une deuxième zone de joint (43) pour l'immobilisation sur le tube d'essieu (2).

9. Unité d'essieu selon l'une des revendications précédentes,
dans laquelle la fusée d'essieu (6) présente au moins deux, de préférence au moins trois, et de toute préférence quatre canaux (62),
dans laquelle le nombre d'évidements (7) est de préférence égal au nombre de canaux (62).

10. Unité d'essieu selon l'une des revendications précédentes,
dans laquelle il est prévu deux fusées d'essieu (6) et une unité de tube (1), dans laquelle une fusée d'essieu peut être immobilisée de chaque côté de l'unité de tube (1).

11. Procédé de fabrication d'une unité d'essieu comprenant les étapes consistant à :
a) fournir une fusée d'essieu (6) avec un canal (62) et une zone de joint de fusée (63), une unité de tube (1) avec une première zone de joint (12), et un élément de conduite (8) ;
b) immobiliser l'élément de conduite (8) au niveau d'une section de raccordement (66) de la fusée d'essieu (6) pour réaliser une connexion étanche ou fluide entre l'élément de conduite (8) et le canal (62) ;
c) faire passer l'élément de conduite (8) par un évidement (7) de l'unité de tube (1) ;
d) immobiliser l'unité de tube (1) au niveau de la fusée d'essieu (6) ; **caractérisé en ce que** le procédé comprend l'étape suivante consistant à :
e) sécuriser la fusée d'essieu (6) à l'encontre d'un déplacement transversal par rapport à un axe de tube (R) relativement à l'unité de tube (1) en enfonçant la zone de joint de fusée (63) dans la première zone de joint (12) de sorte que la zone de joint de fusée (63) et la première zone de joint (12) forment un chevauchement qui présente une longueur de chevauchement (a) se trouvant dans un rapport de 0,05 à 0,4 par rapport à la longueur de fusée (I).

12. Procédé selon la revendication 11,
dans lequel un procédé de soudage thermique est utilisé pour immobiliser l'unité de tube (1) au niveau de la fusée d'essieu (6).

13. Procédé selon l'une des revendications 11 ou 12,
dans lequel l'unité de tube (1) comprend un tube d'essieu (2) et un élément intermédiaire (4),
dans lequel l'évidement (7) est prévu au niveau de l'élément intermédiaire (4), et
dans lequel le tube d'essieu (2) est tout d'abord immobilisé au niveau de l'élément intermédiaire (4), et
dans lequel le tube d'essieu (2) est ensuite immobilisé au niveau du côté de l'élément intermédiaire (4), qui est opposé à la fusée d'essieu (6).

14. Procédé selon la revendication 13,
dans lequel, après l'étape consistant à fournir la fusée d'essieu (6), l'élément intermédiaire (4) est immobilisé au niveau de la fusée d'essieu (6),
dans lequel l'élément de conduite (8) est ensuite relié au canal (62) de la fusée d'essieu (6) et passé par l'évidement (7) hors de l'élément intermédiaire (4) vers l'extérieur,
dans lequel le tube d'essieu (2) est ensuite immobilisé au niveau de l'élément intermédiaire (4).

15. Procédé selon l'une des revendications 13 ou 14,
dans lequel un soudage par friction est employé pour immobiliser l'élément intermédiaire (4) au niveau de la fusée d'essieu (6).
